# EUROPEAN PATENT SPECIFICATION

(11) **EP 3 153 716 B1**
(45) Date of publication and mention of the grant of the patent: **25.10.2023**
(21) Application number: 16191231.6
(22) Date of filing: 28.09.2016
(51) Int. Cl.: F16B 12/20, A47B 91/02, A47B 96/06

(54) **JOINING DEVICE WITH LEVELLER FOR EXTERNAL PANELS OF PARTS OF FURNITURE AND FURNISHING ITEMS**
MINIMALER SICHTBARE HÖHENVERSTELLBARE VERBINDUNGSVORRICHTUNG FÜR MÖBELTEILEN UND MÖBELN.
DISPOSITIF D'ASSEMBLAGE AVEC VISIBILITÉ MINIMALE POUR DES PIÈCES DE MEUBLE ET DES ARTICLES D'AMEUBLEMENT

(30) Priority: 09.10.2015 IT UB20154272
(43) Date of publication of application: 12.04.2017
(73) Proprietor: LEONARDO S.r.l., 22060 Figino Serenza, CO (IT)
(72) Inventor: CATTANEO, Carlo, 22060 Figino serenza (CO) (IT)
(74) Representative: Franco Martegani S.r.l.

(56) References cited:
- WO-A1-92/03663
- WO-A1-2009/056935
- CH-A5- 676 026

## Description

The present invention relates to a joining device with a leveller for external panels of parts of furniture and furnishing items.

The joining between two panels, for example between a shoulder of a piece of furniture and a base, or in any case a shelf, is currently effected in the furniture and furnishing field using various procedures and with different solutions.

Examples of these solutions are known for example from patents US7494297, US5567081, US6547477 and US4408923.

For example, the document WO92/03663 discloses a securing device for use in the construction of pieces of furniture which comprises a horizontal panel having an edge face which butts against a major face of a vertical panel, a member for supporting the weight of the piece of furniture, the device comprising a base having on its underside a mounting for, or at least a part of, said member, the upper side of the base being adapted to engage in and support said horizontal panel, and said base being provided with one part of a two part securing means, the other part of said securing means being adapted for engagement in said major face of said vertical panel, said securing means being operable to draw said base towards said vertical panel whereby in use to both secure said base to the vertical panel and to rigidly secure said horizontal panel in position relative to said vertical panel.

These known solutions have a certain complexity and in any case have a certain visibility, as they require closing elements of the seats or holes necessary for positioning the elements that effect the joining.

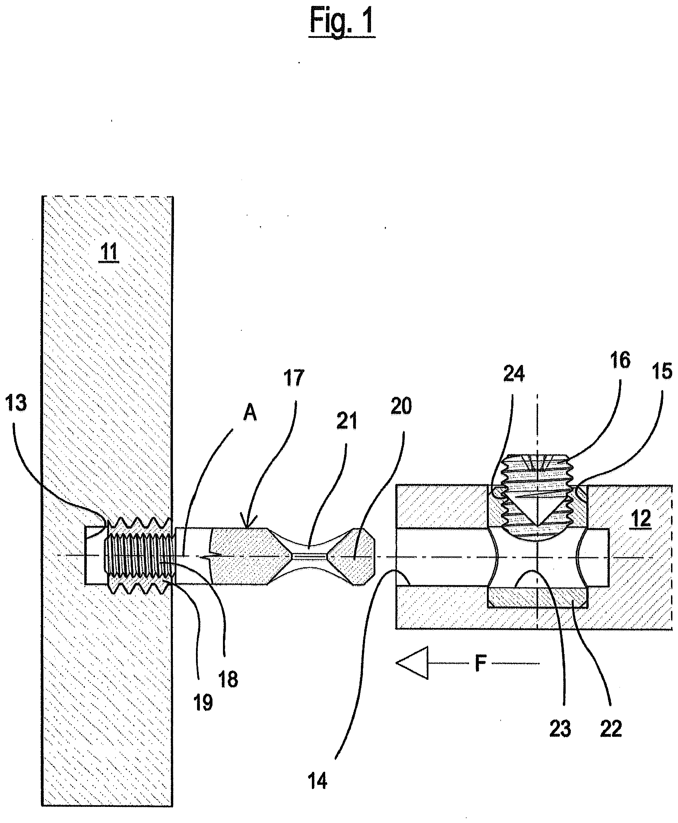

Much more simply, figures 1, 2 and 3 show a known solution of a joining device for parts of furniture and furnishing items, for example between a shoulder of a piece of furniture and a base, or in any case a shelf.

In the known solution illustrated, holes must be provided in both a shoulder 11 and a base 12 of a piece of furniture, both partially shown in a connection part of the same. The shoulder 11, in fact, provides a horizontal blind hole 13 and the base 12 even provides a double hole 14, 15. More specifically, a horizontal hole 14 to be aligned with the hole 13 of the shoulder 11, and a vertical hole 15, formed in the upper surface of the base 12, which intersects the first hole 14, for the insertion of a blocking element, for example a grub screw 16, wherein both holes are blind.

Said hole 13 has an axis A which is perpendicular to the shoulder 11.

This known joining device provides the positioning of a pin 17 with a first threaded end 18 inside an internally threaded bush 19 positioned in the hole 13 of the shoulder 11. The pin 17 contains, at the other end 20, a housing 21 for an end of the grub screw 16.

A bush 22 is housed in the vertical hole 15 of the base 12, which provides a horizontal pass-through hole 23 for receiving the protruding end 20 of the pin 17 and a vertical threaded pass-through hole 24 which receives the grub screw 16.

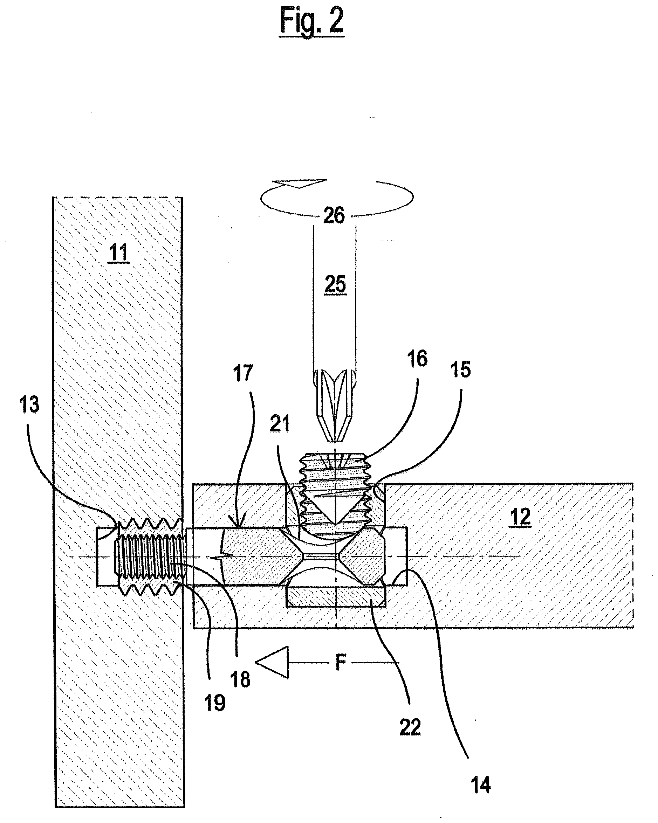

By thus positioning said elements forming the known joining device and juxtaposing the shoulder and the base according to the arrow F of figure 1, the coupling of figure 2 is obtained, with the pin 17 inserted in the hole 14 of the base 12 and in the bush 22.

The grub screw 16 is then screwed, with a tool 25, according to the arrow 26, into the bush 22 so that the tip of the grub screw 16 is positioned in the housing 21 provided at the free end 20 of the pin 17.

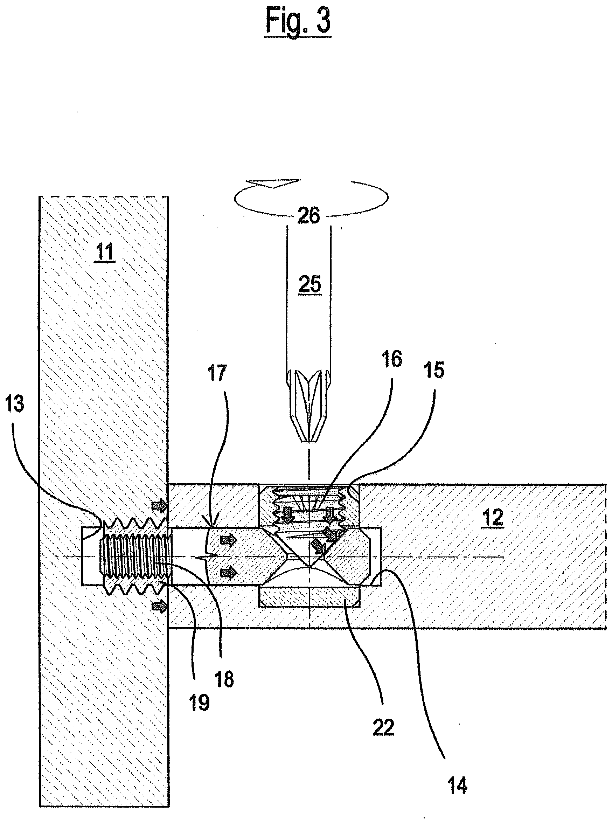

The tightening of the grub screw 16 pushes the base 12 against the shoulder 11 forming the final stable position shown in figure 3.

In this known solution, the blocking group is in the base, it is arranged perpendicular to the base and to the movement or approach direction and tightening between the shoulder and base. Only the pin, with which the blocking group cooperates, is provided in the thickness of the shoulder or side panel.

Said figure 3 indicates, by means of a series of arrows, the scheme of forces at play between the shoulder 11 and base 12 of the piece of furniture and between the parts of the joining device.

This final position also shows how the end of the hole 15 is present on the upper surface of the base 12, and is normally covered with a closing cap (not shown).

Said hole and the corresponding cap form a visible part of the joining device.

In the first place, this part does not have an aesthetically valid appearance as, although there is the presence of the cap, it shows how the joining has been effected. Furthermore, the cap itself, which is difficult to be brought specifically in line with the surface of the base, represents an obstacle for the insertion of any object, creating a protrusion, even if minimum, with respect to the upper surface of the base.

The presence of at least two holes in the base, moreover, intersecting each other, causes a weakening of the base itself that must sustain loads representing a possible cause of breakage.

Furthermore, if the parts of furniture and/or furnishing items need to be levelled, a separate and specific levelling device must be provided, which also performs this important task, in order to always have a correct positioning of the constituent parts.

A further problem arises when the panel in which the joining device is to be positioned, is an external panel or shoulder in which it is important not to have any holes in order not to create visible holes or caps.

The general objective of the present invention is to provide a joining device between parts of furniture and furnishing items, such as a shoulder and a base, capable of solving the drawbacks of the known art indicated above, in an extremely simple, economical and particularly functional manner.

A further objective of the present invention is to provide a joining device between parts of furniture and furnishing items, such as a shoulder and a base, which is not visible to an observer and therefore has a high aesthetical value.

Another objective of the present invention is to provide a joining device between parts of furniture and furnishing items, such as a shoulder and a base, which does not have any protrusion with respect to the upper surface of the base.

A further objective of the present invention is to provide a joining device between parts of furniture and furnishing items, such as a shoulder and a base, which also allows a levelling operation, minimizing the elements involved in order to achieve both the previous objective of minimizing the visibility of the joining device and also that of levelling, indicated above.

Yet another objective of the present invention is to provide a joining device with a leveller for external panels of parts of furniture and furnishing items.

These problems are solved by a joining device according to claim 1.

The structural and functional characteristics of the present invention and its advantages with respect to the known art will appear more evident from the following description, referring to the enclosed schematic drawings which show embodiment examples of the same invention. In the drawings:
- figure 1 is a sectional view illustrating parts, spaced from each other, of a known joining device for parts of furniture and furnishing items, for example between a shoulder of a piece of furniture and a base or in any case a shelf;
- figures 2 and 3 are two sectional views of the known device of figure 1, wherein figure 2 shows said parts juxtaposed with respect to each other and partially inserted in each other and figure 3 shows said parts completely inserted in each other and tightened;

- figure 4 shows a perspective view of a joining device with a leveller according to the present invention with an exploded part;
- figures 5 and 6 are perspective views of the joining device with a leveller illustrated in figure 4, the first showing the device partially open and exploded with respect to the casing, and the second the device completely exploded in its parts;
- figures 7, 8 and 9 are a front view of the device of figure 4 and two sectional views according to the lines VIII-VIII and IX-IX, respectively, of figure 7;
- figures 10 and 11 are a sectional view and a schematic perspective view of a joining device with a leveller for external panels of parts of furniture and furnishing items when effecting the joining operation;
- figures 12 and 13 are a sectional view and a schematic perspective view of a joining device with a leveller for external panels of parts of furniture and furnishing items when effecting a levelling action;
- figures 14 and 15 are sectional views according to the lines XIV-XIV and XV-XV of figure 10;
- figures 16a, 16b, 16c to 21a, 21b, 21c are examples of different holes in panels for the assembly of a joining device with a leveller for external panels according to the invention.

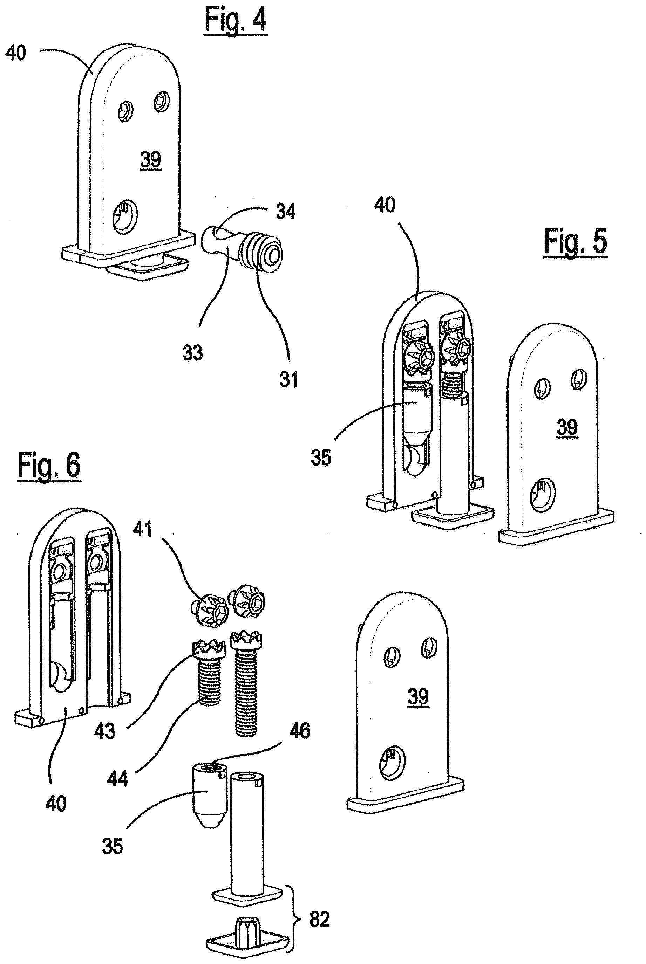

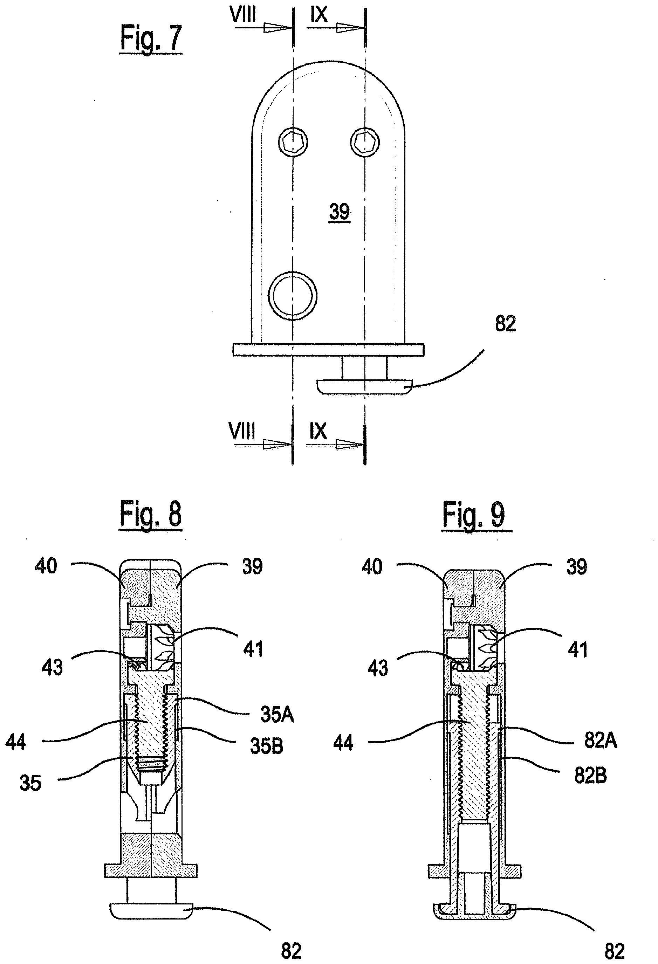

Figures 4 to 15 show an embodiment of a joining device with a leveller for external panels of parts of furniture and furnishing items according to the invention.

Said joining device must connect and join a first panel 11, for example a shoulder 11 of a piece of furniture and a second panel 12, for example a base 12 or, in any case, a panel or shelf, partially shown in the figures. As shown in the examples, the shoulder 11 and the base or panel 12 are generally perpendicular to each other but they may also be tilted with respect to each other.

The base 12 contains, at one of its ends, a seat S2 in the form of a horizontal blind hole in which an internally threaded bush 31 is positioned, blocked, for receiving a threaded end 32 of a pin 33.

The pin 33 provides, in its protruding part, a housing 34 for the tip of a blocking grup screw.

Said pin 33 defines a connection group GC to be firmly blocked for stably interconnecting said shoulder 11 and said base 12, as better explained hereunder.

The shoulder 11 provides a seat S1 - for a blocking group GB - having a substantially elongated configuration, in the form of a vertical blind hole which intersects a first and a second horizontal blind hole 37, 38, spaced from each other.

Said seat S1 characteristically extends from a perimetric edge B1 towards the interior of said shoulder or panel 11.

A pair of half-shells 39, 40, which form a casing inside part of which the grub screw 35 is caused to slide by means of a pinion-toothed crown bevel, is housed in the vertical hole or seat S1.

A pinion 41 is in fact rotatingly positioned inside a hole 42 formed in one of the two half-shells 39 which is aligned with the first horizontal hole 37 of the shoulder 11. The pinion 41 is engaged with a toothed crown 43, formed as head of a threaded screw 44, and can rotate in a seat 45 formed in the two coupled half-shells 39 and 40. The threaded screw 44 is in turn positioned in a threaded axial hole 46 and inside the grub screw 35.

Said components 34, 41, 43, 46, define the blocking group GB suitable for acting on the above-mentioned connection group GC composed of the pin 33, in the manner explained hereunder.

A tool such a screwdriver 57, through one of its tips, is suitable for being inserted inside a complementary seat of the pinion 41, passing through the first hole 37 of the shoulder 11 thus being coupled with the same to cause its rotation.

The rotation of the pinion 41 in turn causes the rotation of the toothed crown 43 of the head of the threaded screw 44. The rotation of the threaded screw 44 forces the downward movement of the grub screw 35.

It can thus be seen how, in this part, the joining device of the present invention essentially comprises the blocking group GB (35, 41, 43, 44, 46) inserted inside a seat S1 in the form of an elongated vertical hole of the shoulder 11, which acts on a pin 33 connection group GC to be blocked, positioned inside the seat S2 of the base 12 and which extends from a horizontal hole or seat S2 formed laterally with respect to the same base 12. The blocking group GB is inserted in the seat S1 which is completely contained in the thickness SP of the shoulder or panel 11, wherein the longitudinal axis x of said seat S1 or hole extends perpendicular to the approach and tightening direction d of the base with respect to the shoulder or panel.

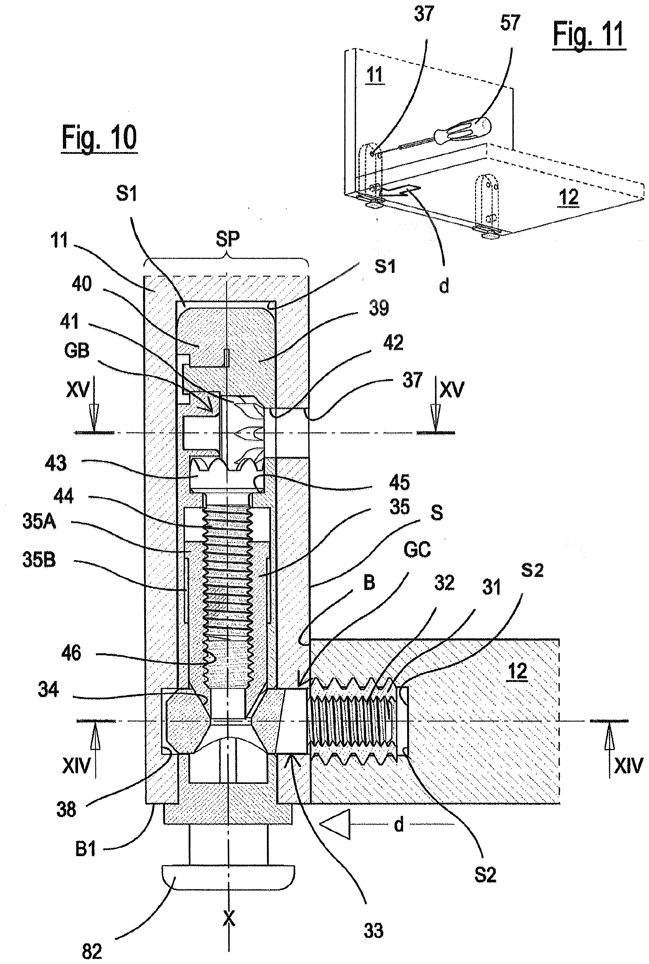

Therefore, the two parts of the joining device according to the present invention are first positioned by placing the two half-shells 39 and 40 in the hole or seat S1 of the shoulder 11 and the pin 33 in the hole or seat S2 of the base 12, as shown in figure 10.

The edge B of the base 12 is then moved towards the surface S of the shoulder 11, inserting the protruding part of the pin 33 into the second horizontal hole 38 of the shoulder 11.

The screwdriver 57 is subsequently inserted in the complementary seat of the pinion 41, passing through the first hole 37 of the shoulder 11 so as to cause the rotation of the pinion 41. The rotation of the pinion 41 causes the rotation of the toothed crown 43 of the head of the threaded screw 44 which forces the downward movement of the grub screw 35; for this purpose, the grub screw 35 is provided with anti-rotation blocking means 35A, 35B (anti-rotational form) which allow the translation of the same grub screw 35, preventing its rotation. The means 35A can consist, for example, of radial protrusions which are coupled inside corresponding seats 35B of the half-shells 39, 40.

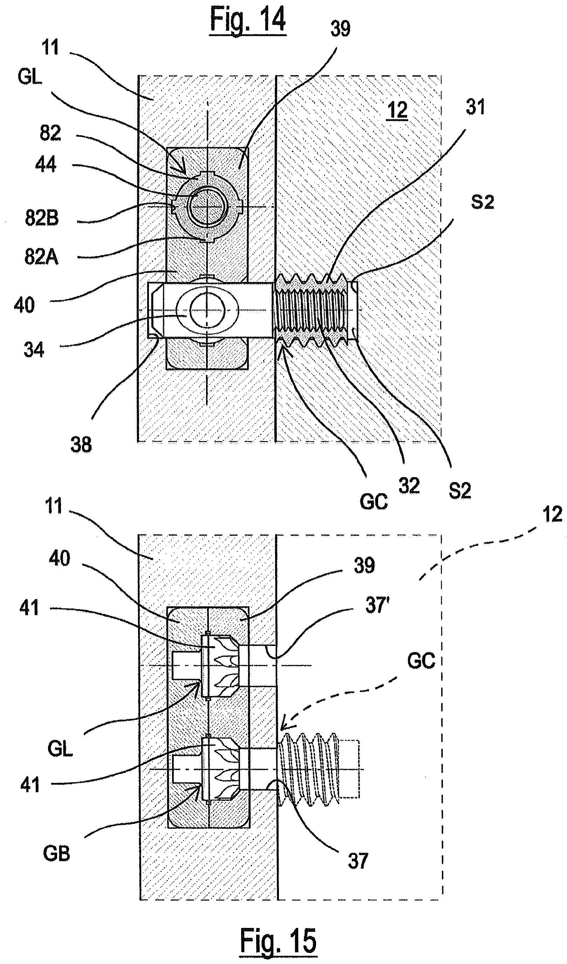

The tip of the grub screw 35 is engaged in the housing 34 of the pin causing the tightening between the shoulder 11 and the base 12, as shown in figures 10 and 14.

It should also be noted that according to the present invention, the pair of half-shells 39, 40, that form a shaped casing, inside part of which the blocking group GB is housed, also additionally houses a levelling group GL.

The levelling group GL also comprises a pinion-toothed crown bevel. A pinion 41 is rotatably positioned in the half-shells 39, 40 in a hole 42 formed in one 39 of the two half-shells 39, 40. This hole 42 is aligned with a further first horizontal hole 37' produced in the shoulder 11 adjacent to the first hole 37 mentioned above for the blocking group GB.

The pinion 41 engages with a toothed crown 43, formed as the head of a threaded screw 44, and can rotate in a seat 45 produced in the two coupled half-shells 39 and 40. The threaded screw 44, in turn, is positioned in a threaded axial hole 46 and inside a supporting leg 82 on a floor P.

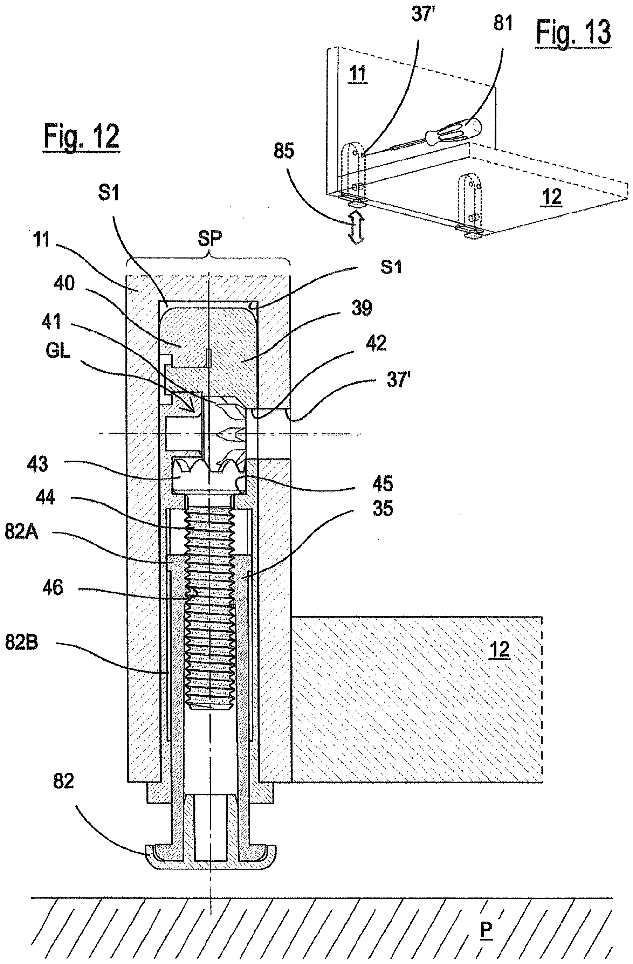

The components 41,43,44,46,82 define the levelling group GL (figures 12 and 13) which cooperates according to the invention with both the blocking group GB and with the connection group GC.

The actuation of said levelling group GL is always effected by means of a screwdriver 81 (figure 13) which, passing through the first horizontal hole 37' formed in the shoulder 11, causes the pinion 41 to rotate and everything connected with the same as far as the leg 82.

The rotation of the threaded screw 44 forces the downward movement of the supporting leg 82 to reach the floor P, thanks to the cooperation with the threaded axial hole 46 inside the leg 82.

It should be pointed out that in order to effect the downward or upward movement of the leg, and not its contemporaneous rotation, specific anti-rotation means are provided.

In the example shown, the leg 82 is provided with blocking means 82A and 82B against rotation (anti-rotation form), which allow the translation of the same leg 82, preventing its rotation. The means 82A can consist, for example, of radial protrusions which are coupled inside corresponding seats 82B of the half-shells 39, 40.

In this way, an adjustment can be effected with respect to the floor P or other supporting plane, according to the double direction indicated by the arrow 85.

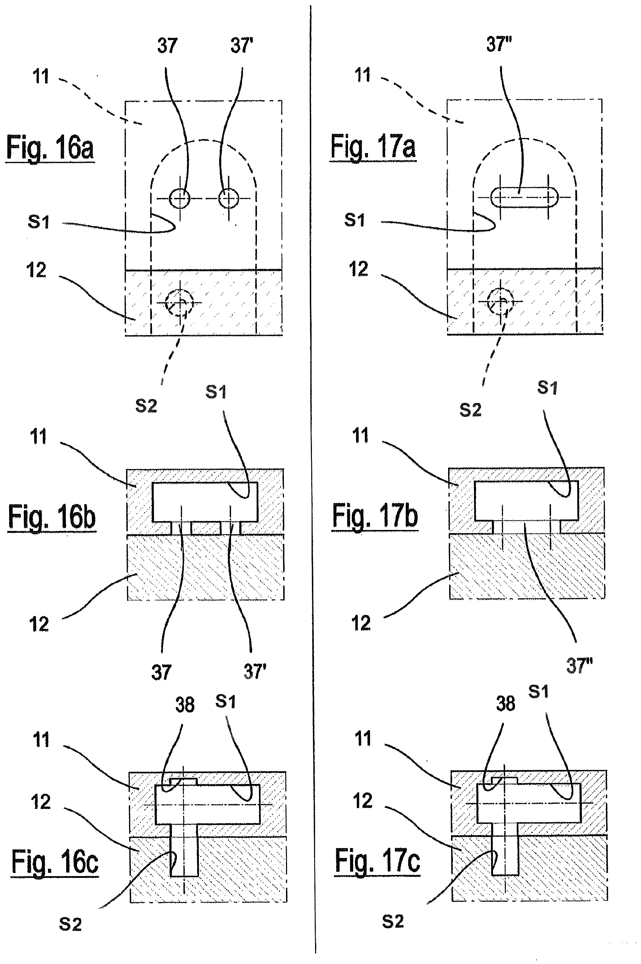

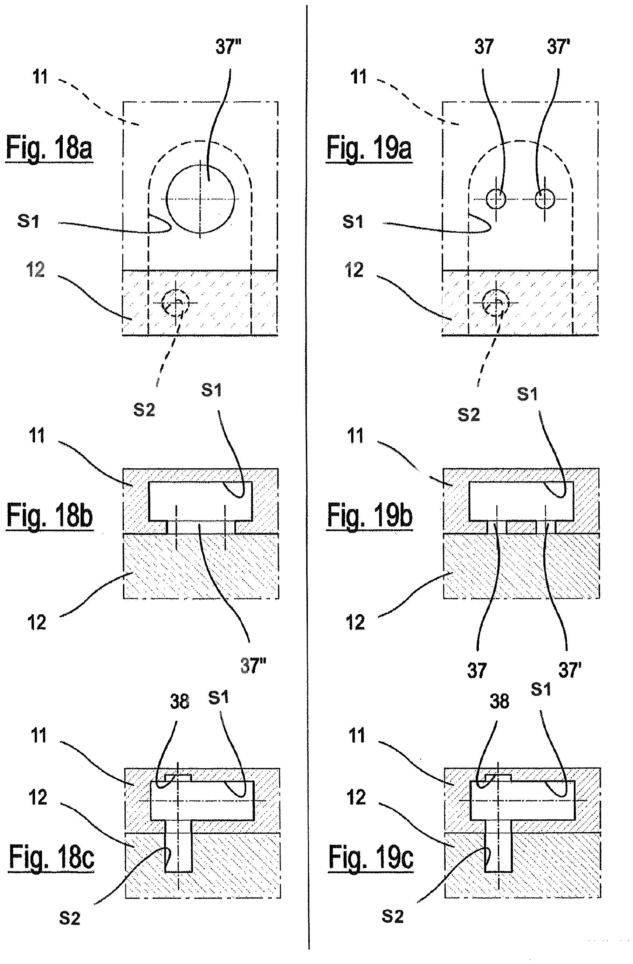

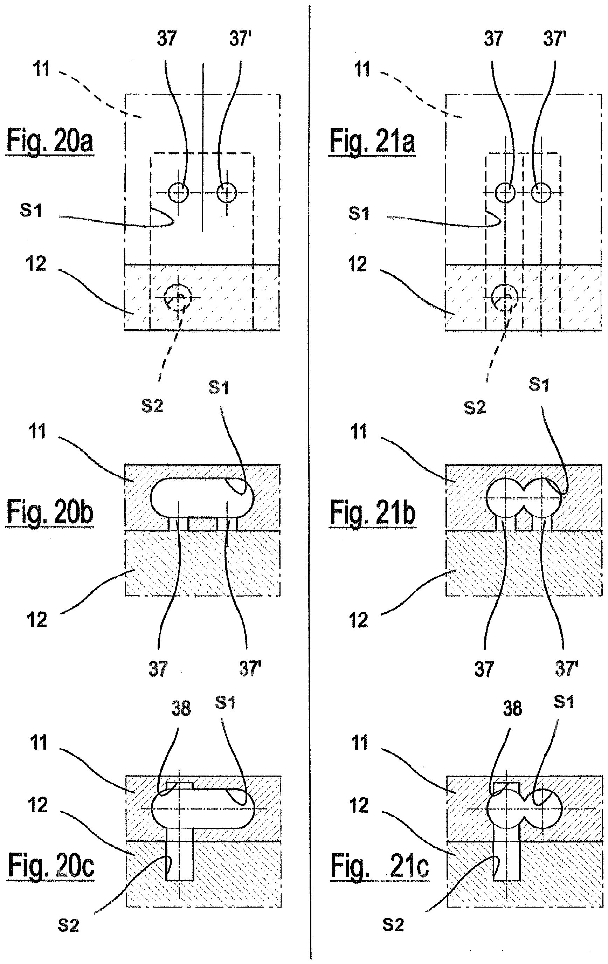

Finally, figures 16a, 16b, 16c to 21a, 21b, 21c are examples of different holes or seats S1 in a vertical panel or shoulder 11 for the assembly of a joining device with a leveller for external panels according to the invention.

Figures 16a, 16b and 16c show how this hole or seat S1 has a rectangular section with a rounded upper portion with two spaced holes 37 and 37', whereas the subsequent figures 17a, 17b and 17c show how, with the same section, the two spaced holes 37 and 37' are joined in a single elongated hole 37". In 18a, 18b and 18c, the only hole 37" is circular.

Figures 20a, 20b and 20c show how this hole or seat S1 has a rectangular section with a rounded upper portion and edges in a rounded transversal section with two spaced holes 37 and 37', whereas the subsequent figures 21a, 21b and 27c show how there is an "eight-shaped" section with the two holes 37 and 37' spaced apart.

In conclusion, it can be seen that with a joining device according to the invention, the problem relating to the visibility of the device has been advantageously solved. The formation of the actuation area on the shoulder of the piece of furniture creates an esthetically pleasing appearance.

Furthermore, any possible caps positioned in the holes do not interfere with what is resting on the base of the furniture which is free of any type of hole.

In this way, there are no obstacles on the base for the insertion of any object, eliminating any type of protrusion, even if minimum, with respect to the upper surface of the base.

Holes produced on the shoulder are not particularly visible to an observer with respect to holes on the base as in the known art, thus obtaining a high aesthetical value.

Furthermore, the elimination of holes that intersect with each other in the base eliminates any possible weakening of the base itself that can therefore sustain high loads without the danger of a possible cause of breakage of the base.

The contemporaneous presence of a levelling group GL inside the half-shells 39, 40 on the one hand, allows an adjustment with respect to the floor, and on the other, a minimum encumbrance as the blocking group GB and the levelling group GL are both inside the half-shells.

The objectives mentioned in the preamble of the description have therefore been achieved.

The protection scope of the present invention is defined by the enclosed claims.

## Claims

1. A joining device with a leveller for external panels of parts of furniture and furnishing items, in particular between a first panel (11), such as a shoulder of a piece of furniture, and a second panel (12), such as a base or shelf of a piece of furniture, which must be moved towards each other according to an approach direction (d) in order to bring the edge (B) of one panel abutted in a tightening position against a surface (S) of the other panel, said joining device consisting of a blocking group (GB) and a connection group (GC) configured to be assembled on said panels (11,12), wherein a levelling group (GL) is also provided, configured to be inserted inside the same seat (S1) as the blocking group (GB), said seat (S1) being contained in a thickness (SP) of the first panel (11) in which said blocking group (GB) and said levelling group (GL) are configured to be positioned, said seat (S1) having a longitudinal axis (X) which is perpendicular to said direction (d), and extending from an edge (B1) towards the interior of said first panel (11); wherein said blocking group (GB) is configured to be positioned in a first holing (S1) of said shoulder (11) and acts on at least said connection group (GC) to be blocked, said connection group (GC) is configured to be situated on said at least one base (12,12') and is configured to extend from a second holing (S2) produced laterally with respect to said base (12), wherein said connection group (GC) is a pin connection group and comprises a pin (33) that is positioned, in a threaded end (32), in an internally threaded bush (31), configured to be positioned in said second holing (S2) of said base (12);
wherein said blocking group (GB) comprises a grub screw and a first pinion-toothed crown bevel (41,43), said first pinion-toothed crown bevel is housed in a casing (39,40) configured to be positioned in said first holing (S1) of said shoulder (11) and controls the movement of said grub screw (35) suitable for being engaged on said pin group (33);
said pin (33) providing, in its protruding part, a housing (34) for said grub screw (35),
wherein said levelling group (GL) is positioned in said casing (39,40) and comprises supporting leg and a second pinion-toothed crown bevel (41,43), said second pinion-toothed crown bevel (41,43) is housed in said casing (39,40) configured to be positioned in said first holing (S1) of said shoulder (11) and controls the movement of said supporting leg (82) suitable for being engaged on a floor (P).

2. The device according to claim 1, **characterized in that** said first holing (S1) in said shoulder (11), is vertical.

3. The device according to claim 2, **characterized in that** said second holing (S2) in said base (12), is horizontal.

4. The device according to claim 1, **characterized in that** said blocking group (GB) and said levelling group (GL) can both be actuated from first holes (37,37') formed in said shoulder (11) spaced and adjacent to each other.

5. - The device according to one or more of the previous claims, **characterized in that** said blocking group (GB) can be actuated from a first hole (37) produced in said shoulder (11) and that said connection group (GC) can be coupled with said shoulder (11) from a second hole (38) formed in said shoulder (11), said two holes (37, 38) being spaced apart and horizontal.

6. The device according claim 1, **characterized in that** a toothed crown (43) of the bevel of said blocking group (GB) extends into a threaded screw (44), which in turn is positioned in a threaded hole (46) axial to and inside said grub screw (35).

7. The joining device according claim 1, **characterized in that** a toothed crown (43) of the bevel of said levelling group (GL) extends into a threaded screw (44), which in turn is positioned in a threaded hole (46) axial to and inside said supporting leg (82).

## Patentansprüche

1. Verbindungsvorrichtung mit einer Nivelliereinrichtung für Außentafeln von Möbelteilen und Einrichtungsgegenständen, insbesondere zwischen einer ersten Tafel (11), wie einer Schulter eines Möbelstücks, und einer zweiten Tafel (12), wie einer Basis oder einem Regal eines Möbelstücks, die gemäß einer Annäherungsrichtung (d) aufeinander zu bewegt werden müssen, um den Rand (B) einer Tafel in einer Spannposition gegen eine Oberfläche (S) der anderen Tafel in Anlage zu bringen, wobei die Verbindungsvorrichtung aus einer Blockiergruppe (GB) und einer Verbindungsgruppe (GC) besteht, die so konfiguriert sind, dass sie an den Tafeln (11, 12) montiert werden können,
wobei auch eine Nivelliergruppe (GL) vorgesehen ist, die so konfiguriert ist, dass sie in denselben Sitz (S1) wie die Blockiergruppe (GB) eingesetzt werden kann, wobei der Sitz (S1) in einer Dicke (SP) der ersten Tafel (11) enthalten ist, in der die Blockiergruppe (GB) und die Nivelliergruppe (GL) zur Positionierung konfiguriert sind, wobei der Sitz (S1) eine Längsachse (X) aufweist, die senkrecht zu der Richtung (d) ist und sich von einem Rand (B1) zum Inneren der ersten Tafel (11) erstreckt;
wobei die Blockiergruppe (GB) so konfiguriert ist, dass sie in einer ersten Ausnehmung (S1) der Schulter (11) positioniert werden kann und auf mindestens die zu blockierende Verbindungsgruppe (GC) einwirkt, wobei die Verbindungsgruppe (GC) so konfiguriert ist, dass sie sich auf der mindestens einen Basis (12, 12') befinden kann, und so konfiguriert ist, dass sie sich von einer zweiten Ausnehmung (S2) aus erstreckt, die seitlich in Bezug auf die Basis (12) ausgebildet ist, wobei die Verbindungsgruppe (GC) eine Stiftverbindungsgruppe ist und einen Stift (33) umfasst, der in einem Gewindeende (32) in einer Innengewindebuchse (31) positioniert ist, die so konfiguriert ist, dass sie in der zweiten Ausnehmung (S2) der Basis (12) positioniert werden kann;
wobei die Blockiergruppe (GB) eine Madenschraube und ein erstes Ritzel-Zahnkranz-Winkelgetriebe (41, 43) umfasst, wobei das erste Ritzel-Zahnkranz-Winkelgetriebe in einem Gehäuse (39, 40) untergebracht ist, das so konfiguriert ist, dass es in der ersten Ausnehmung (S1) der Schulter (11) positioniert werden kann, und die Bewegung der Madenschraube (35) steuert, die geeignet ist, mit der Stiftgruppe (33) in Eingriff zu treten;
wobei der Stift (33) in seinem vorstehenden Teil eine Aufnahme (34) für die Madenschraube (35) aufweist,
wobei die Nivelliergruppe (GL) in dem Gehäuse (39, 40) positioniert ist und einen Stützschenkel und ein zweites Ritzel-Zahnkranz-Winkelgetriebe (41, 43) umfasst, wobei das zweite Ritzel-Zahnkranz-Winkelgetriebe (41, 43) in dem Gehäuse (39, 40) untergebracht ist, das so konfiguriert ist, dass es in der ersten Ausnehmung (S1) der Schulter (11) positioniert wird, und die Bewegung des Stützschenkels (82) steuert, der geeignet ist, auf einem Boden (P) in Eingriff gebracht zu werden.

2. Vorrichtung nach Anspruch 1, **dadurch gekennzeichnet, dass** die erste Ausnehmung (S1) in der Schulter (11) vertikal ist.

3. Vorrichtung nach Anspruch 2, **dadurch gekennzeichnet, dass** die zweite Ausnehmung (S2) in der Basis (12) horizontal ist.

4. Vorrichtung nach Anspruch 1, **dadurch gekennzeichnet, dass** die Blockiergruppe (GB) und die Nivelliergruppe (GL) beide von ersten Löchern (37, 37') aus betätigt werden können, die in der Schulter (11) gebildet und voneinander beabstandet und benachbart sind.

5. Vorrichtung nach einem der vorhergehenden Ansprüche, **dadurch gekennzeichnet, dass** die Blockiergruppe (GB) von einem ersten Loch (37) aus betätigt werden kann, das in der Schulter (11) ausgebildet ist, und dass die Verbindungsgruppe (GC) mit der Schulter (11) von einem zweiten Loch (38) aus gekoppelt werden kann, das in der Schulter (11) ausgebildet ist, wobei die beiden Löcher (37, 38) voneinander beabstandet und horizontal sind.

6. Vorrichtung nach Anspruch 1, **dadurch gekennzeichnet, dass** sich ein Zahnkranz (43) des Winkelgetriebes der Blockiergruppe (GB) in eine Gewindeschraube (44) erstreckt, die ihrerseits in einer Gewindebohrung (46) axial zu und innerhalb der Madenschraube (35) angeordnet ist.

7. Verbindungsvorrichtung nach Anspruch 1, **dadurch gekennzeichnet, dass** sich ein Zahnkranz (43) des Winkelgetriebes der Nivelliergruppe (GL) in eine Gewindeschraube (44) erstreckt, die ihrerseits in einer Gewindebohrung (46) axial zum und innerhalb des Stützschenkels (82) angeordnet ist.

## Revendications

1. Dispositif d'assemblage doté d'un dispositif de mise à niveau pour des panneaux extérieurs de pièces de meuble et d'articles d'ameublement, notamment entre un premier panneau (11), tel qu'un épaulement d'une pièce de meuble, et un second panneau (12), tel qu'une base ou une étagère d'une pièce de meuble, qui doivent être rapprochées l'un de l'autre selon une direction d'approche (d) afin d'amener le bord (B) d'un panneau en butée dans une position de serrage contre une surface (S) de l'autre panneau, ledit dispositif d'assemblage étant constitué d'un groupe de blocage (GB) et d'un groupe de liaison (GC) conçus pour être assemblés sur lesdits panneaux (11, 12), un groupe de mise à niveau (GL) étant également prévu, conçu pour être inséré à l'intérieur du même siège (S1) que le groupe de blocage (GB), ledit siège (S1) étant contenu dans une épaisseur (SP) du premier panneau (11) dans lequel ledit groupe de blocage (GB) et ledit groupe de mise à niveau (GL) sont conçus pour être positionnés, ledit siège (S1) comportant un axe longitudinal (X) qui est perpendiculaire à ladite direction (d), et s'étendant à partir d'un bord (B1) vers l'intérieur dudit premier panneau (11) ; ledit groupe de blocage (GB) étant conçu pour être positionné dans une première perforation (S1) dudit épaulement (11) et agissant sur au moins ledit groupe de liaison (GC) à bloquer, ledit groupe de liaison (GC) étant conçu pour être situé sur ladite au moins une base (12, 12') et étant conçu pour s'étendre à partir d'une second perforation (S2) réalisée latéralement par rapport à ladite base (12), ledit groupe de liaison (GC) étant un groupe de liaison à broche et comprenant une broche (33) qui est positionnée, dans une extrémité filetée (32), dans une douille taraudée (31), conçue pour être positionnée dans ladite seconde perforation (S2) de ladite base (12) ;
ledit groupe de blocage (GB) comprenant une vis sans tête et un premier biseau de couronne dentée formant pignon (41, 43), ledit premier biseau de couronne dentée formant pignon étant logé dans un boîtier (39, 40) conçu pour être positionné dans ladite première perforation (S1) dudit épaulement (11) et commandant le mouvement de ladite vis sans tête (35) apte à être mise en prise sur ledit groupe de broches (33) ;
ladite broche (33) fournissant, dans sa partie saillante, un logement (34) pour ladite vis sans tête (35), ledit groupe de mise à niveau (GL) étant positionné dans ledit boîtier (39, 40) et comprenant une jambe d'appui et un second biseau de couronne dentée formant pignon (41, 43), ledit second biseau de couronne dentée formant pignon (41, 43) étant logé dans ledit boîtier (39, 40) conçu pour être positionné dans ladite première perforation (S1) dudit épaulement (11) et commandant le déplacement de ladite jambe d'appui (82) apte à être mise en prise sur un sol (P).

2. Dispositif selon la revendication 1, **caractérisé en ce que** ladite première perforation (S1) dans ledit épaulement (11) est verticale.

3. Dispositif selon la revendication 2, **caractérisé en ce que** ladite seconde perforation (S2) dans ladite base (12) est horizontale.

4. Dispositif selon la revendication 1, **caractérisé en ce que** ledit groupe de blocage (GB) et ledit groupe de mise à niveau (GL) peuvent tous deux être actionnés à partir de premiers trous (37, 37') formés dans ledit épaulement (11) espacés et adjacents l'un à l'autre.

5. Dispositif selon une ou plusieurs des revendications précédentes, **caractérisé en ce que** ledit groupe de blocage (GB) peut être actionné à partir d'un premier trou (37) réalisé dans ledit épaulement (11) et **en ce que** ledit groupe de liaison (GC) peut être couplé avec ledit épaulement (11) à partir d'un second trou (38) formé dans ledit épaulement (11), lesdits deux trous (37, 38) étant espacés et horizontaux.

6. Dispositif selon la revendication 1, **caractérisé en ce qu'**une couronne dentée (43) dudit biseau dudit groupe de blocage (GB) s'étend dans une vis filetée (44), qui à son tour est positionnée dans un trou fileté (46) axial par rapport à ladite vis sans tête (35) et à l'intérieur de celle-ci.

7. Dispositif d'assemblage selon la revendication 1, **caractérisé en ce que** ladite couronne dentée (43) dudit biseau dudit groupe de mise à niveau (GL) s'étend dans une vis filetée (44), qui à son tour est positionnée dans un trou fileté (46) axial par rapport à ladite jambe d'appui (82) et à l'intérieur de celle-ci.
